# EUROPÄISCHE PATENTSCHRIFT

(11) **EP 3 622 244 B1**
(45) Veröffentlichungstag und Bekanntmachung des Hinweises auf die Patenterteilung: **24.03.2021**
(21) Anmeldenummer: 18722506.5
(22) Anmeldetag: 04.05.2018
(51) Int. Cl.: G01B 7/06, G01B 5/06

(54) **VORRICHTUNG UND VERFAHREN ZUM ERFASSEN EINER SCHICHTDICKE EINES BESCHICHTETEN BAUTEILS**
DEVICE AND METHOD FOR DETECTING A LAYER THICKNESS OF A COATED COMPONENT
DISPOSITIF ET PROCÉDÉ POUR DÉTERMINER L'ÉPAISSEUR DE REVÊTEMENT D'UN COMPOSANT POURVU D'UN REVÊTEMENT

(30) Priorität: 10.05.2017 DE 102017207841
(43) Veröffentlichungstag der Anmeldung: 18.03.2020
(73) Patentinhaber: Robert Bosch GmbH, 70442 Stuttgart (DE)
(72) Erfinder: MAURER, Christoph, 35043 Marburg (DE); HUSCHENHOEFER, Wolfgang, 35614 Asslar (DE); WILLEKE, Marian, 58095 Hagen (DE)
(86) Internationale Anmeldenummer: PCT/EP2018/061460
(87) Internationale Veröffentlichungsnummer: WO 2018/206416

(56) Entgegenhaltungen:
- EP-A1- 2 905 573
- WO-A1-2016/051147
- US-A1- 2013 111 774

## Beschreibung

Die Erfindung betrifft eine Vorrichtung zum Erfassen der Schichtdicke eines beschichteten Bauteils, insbesondere einer Bremsscheibe für eine Scheibenbremse eines Kraftfahrzeugs, mit zumindest einer, eine Auflagefläche für das Bauteil aufweisenden Haltevorrichtung, und mit einer Führungseinrichtung zum Halten und Führen eines Sensors zur Schichtdickenmessung, wobei der Sensor durch die Führungseinrichtung entlang einer Vertikalachse verschiebbar und um eine erste Rotationsachse verschwenkbar ist.

Ferner betrifft die Erfindung ein Verfahren zum Betreiben der Vorrichtung.

### Stand der Technik

Vorrichtungen der eingangs genannten Art sind aus dem Stand der Technik bekannt. So geht aus der Offenlegungsschrift DE 10 2010 011 633 A1 ein Messstativ zur Aufnahme von zumindest einer, zum Erfassen einer Schichtdicke eines beschichteten Bauteils ausgebildeten Messsonde hervor. Das Messstativ weist dabei einen Messtisch als Auflagefläche für das Bauteil sowie ein Gehäuse zum Halten und Führen der Messsonde auf. Die Messsonde ist dabei an dem Gehäuse derart gelagert, dass sie entlang einer Vertikalachse verschiebbar und um eine parallel zur Vertikalachse ausgerichtete Rotationsachse verschwenkbar ist.

Aus der Offenlegungsschrift US 2013/0111774 A1 ist eine Vorrichtung bekannt, die eine Führungseinrichtung für einen Sensor aufweist, die eine Bewegung des Sensors entlang einer Vertikalachse und einer Horizontalachse und darüber hinaus ein Verschwenken des Sensors um eine Rotationsachse, die horizontal ausgerichtet ist, erlaubt. Aus der Offenlegungsschrift WO 2016/051147 A1 ist weiterhin eine Ultraschall-Untersuchungseinrichtung bekannt, mit einer Führungseinrichtung für ein Sensor, die ebenfalls eine Bewegung des Sensors entlang einer vertikalen Achse und einer horizontalen Achse erlaubt, sowie ein Verschwenken des Sensors um eine horizontale Achse. Aus der Offenlegungsschrift EP 2 905 573 A1 ist ein Messstativ zur Aufnahme einer Messsonde bekannt.

### Offenbarung der Erfindung

Die erfindungsgemäße Vorrichtung mit den Merkmalen des Anspruchs 1 zeichnet sich dadurch aus, dass der Sensor durch die Führungseinrichtung außerdem entlang einer Horizontalachse verschiebbar ist, und dass die Rotationsachse horizontal ausgerichtet ist. Hierbei ergibt sich zum einen der Vorteil, dass der Sensor zusätzlich zu einem Translationsfreiheitsgrad in vertikaler Richtung einen Translationsfreiheitsgrad in horizontaler Richtung aufweist. Durch den zusätzlichen Translationsfreiheitsgrad erweitern sich somit die Bewegungsmöglichkeiten des Sensors, so dass in horizontaler Richtung zusätzliche Positionen, insbesondere Schichtdickenmesspunkte, auf einer Oberfläche des Bauteils durch den Sensor erreichbar sind. Zum anderen ergibt sich durch die horizontale Ausrichtung der Rotationsachse der Vorteil, dass der Sensor derart verschwenkbar ist, dass eine Oberseite, eine der Oberseite gegenüberliegende Unterseite und/oder zumindest eine Seitenwand, beispielsweise eine Außen- und/oder Innenmantelwand, des Bauteils oder der Bremsscheibe durch den Sensor auf einfache Art und Weise erreichbar sind. Ein Verdrehen des Bauteils, beispielsweise ein Verdrehen des Bauteils um 180°, so dass zunächst die Oberseite und daraufhin die Unterseite dem Sensor gegenüberliegend angeordnet ist, ist somit nicht notwendig. Die Oberseite, Unterseite und/oder Seitenwand sind somit mit minimalem Aufwand in einer einzigen Aufspannung des Bauteils erreichbar und somit für eine Schichtdickenmessung erfassbar.

Gemäß einer bevorzugten Weiterbildung der Erfindung ist vorgesehen, dass die Auflagefläche der Haltevorrichtung um eine zweite Rotationsachse, die vertikal ausgerichtet ist, drehbar ist. Der Vorteil hierbei ist, dass durch die Kombination aus der Verschiebbarkeit des Sensors in horizontaler Richtung, der Verschwenkbarkeit des Sensors um die erste Rotationsachse und der Verdrehbarkeit der Auflagefläche um die zweite Rotationsachse auf besonders einfache Art und Weise an jeder Position oder jedem Punkt auf der Oberfläche des Bauteils die Schichtdicke messbar ist. Die Schichtdickenmessung ist somit in einer einzigen Aufspannung des Bauteils mit minimalem Messaufwand und Platzbedarf an jeder Position möglich. Dadurch ergibt sich sowohl eine besonders effiziente Messmethode als auch eine besonders kompakte Ausbildung oder Ausbildbarkeit der Vorrichtung, weil das Bauteil lediglich drehbar und damit insbesondere ortsfest auf der Auflagenfläche angeordnet ist.

Bevorzugt ist vorgesehen, dass die Führungseinrichtung einen oder mehrere ansteuerbare Aktuatoren zum Verschieben und/oder Drehen des Sensors aufweist. Der Vorteil hierbei ist, dass ein Verschieben und/oder Drehen, also ein Positionieren des Sensors, automatisch und damit besonders präzise durchführbar ist. Zusätzlich ist es dadurch möglich, den Sensor mit einer vorgebbaren, insbesondere unkritischen Anpresskraft auf die Oberfläche des Bauteils für eine Schichtdickenmessung aufzusetzen. Vorzugsweise ist vorgesehen, sowohl kontaktierende als auch nicht-kontaktierende Schichtdickenmessungen durchzuführen. Der Aktuator ist vorzugsweise ein elektromotorischer Aktuator. Zur Ansteuerung ist der Aktuator vorzugsweise mit einem Steuergerät, insbesondere einem Steuergerät der Vorrichtung, elektrisch verbunden. Das Steuergerät weist vorzugsweise eine Datenspeichereinheit auf, in welcher beispielsweise vorgebbare Messpositionen oder Koordinaten von Messpositionen abgespeichert sind und welche an die Aktuatoren übermittelt werden, um den Sensor entsprechend der Koordinaten zu positionieren. Vorzugsweise erfolgt vor einer Schichtdickenmessung eine Positionsbestimmung oder Bestimmung einer Dimensionierung des Bauteils oder der Bremsscheibe, so dass daraufhin die Schichtdickenmessung zuverlässig durchführbar ist.

Vorzugsweise weist die Führungseinrichtung zumindest eine Führungsschiene, welche die Horizontalachse definiert, auf. Dabei ergibt sich der Vorteil, dass eine präzise lineare Führung der Führungseinrichtung in horizontaler Richtung gewährleistet ist. Vorzugsweise ist die Führungsschiene aus einem Metall gebildet. Zusätzlich ist vorzugsweise vorgesehen, dass die Führungseinrichtung eine weitere Führungsschiene aufweist, welche die Vertikalachse definiert. Diese ist bevorzugt dazu ausgebildet, den Sensor in vertikaler Richtung präzise zu führen.

Besonders bevorzugt ist vorgesehen, dass die Haltevorrichtung zumindest einen ansteuerbaren Aktuator zum Verdrehen der Auflagefläche aufweist. Der Vorteil hierbei ist, dass auch das Verdrehen der Auflagefläche automatisch und damit besonders präzise durchführbar ist. Insbesondere die Kombination aus der automatischen Positionierbarkeit des Sensors und dem automatischen Verdrehen der Auflagefläche gewährleistet die Durchführbarkeit einer besonders zuverlässigen, wiederholbaren und vollständig automatisierten Schichtdickenmessung. Dies minimiert zum einen eine Messdauer und einen Bedienereinfluss, weil ein manuelles Positionieren und/oder Verdrehen der Auflagefläche durch einen Benutzer nicht notwendig ist. Aufgrund der Automatisierung können zum anderen Kosten, insbesondere Personalkosten, gespart werden. Vorzugsweise ist der Aktuator zum Verdrehen der Auflagefläche ein elektromotorischer Aktuator. Bevorzugt ist vorgesehen, dass der Aktuator zum Verdrehen der Auflagefläche zur Ansteuerung mit einem Steuergerät, vorzugsweise mit dem Steuergerät, das zum Verschieben und/oder Drehen des Sensors ausgebildet ist, insbesondere elektrisch beziehungsweise signaltechnisch verbunden ist.

Gemäß einer Weiterbildung der Erfindung ist vorgesehen, dass der Sensor als magnetinduktive Messsonde oder als Wirbelstrommesssonde ausgebildet ist. Der Vorteil hierbei ist, dass die Schichtdicke besonders genau messbar ist. Die magnetinduktive Messsonde wird beispielsweise verwendet, um eine Schichtdicke eines nicht-magnetischen Schichtmaterials, beispielsweise Zink oder Kunststofflack, auf einem magnetisierbaren Bauteil, beispielsweise Eisen, zu erfassen. Dabei wird die induktive Messsonde, insbesondere ein Messkopf der Messsonde, auf die Oberfläche des Bauteils aufgesetzt. Durch einen elektrischen Strom wird ein Magnetfeld in der induktiven Messsonde erzeugt, dessen Feldstärke von der Beschichtung, insbesondere dem Material der Beschichtung und/oder einer Dicke der Beschichtung, abhängt. Das durch die Messsonde in Abhängigkeit der gemessenen Feldstärke erfasste Messsignal wird dann vorzugsweise an das Steuergerät oder die Datenspeichereinheit übermittelt, welche mittels vorzugsweise einer Messsignal-Schichtdicken-Kennlinie aus dem erfassten Messsignal eine Schichtdicke ermittelt. Die Wirbelstrommesssonde wird beispielsweise verwendet, um eine Schichtdicke eines nicht-magnetischen Schichtmaterials auf einem elektrisch leitfähigen Nichteisenmetall zu erfassen.

Erfindungsgemäß ist der Sensor an einem freien Ende eines koaxial zu der ersten Rotationsachse angeordneten Führungsarms angeordnet. Hierdurch ergibt sich der Vorteil, dass der Sensor durch den Führungsarm entlang der Vertikalachse der Führungseinrichtung besonders präzise verschiebbar ist. Vorzugsweise ist der Führungsarm einendig an der Führungseinrichtung, insbesondere an der weiteren Führungsschiene, welche die Vertikalachse definiert, verlagerbar oder verschiebbar geführt. Bevorzugt ist vorgesehen, dass der Sensor durch eine Sensorhalterung insbesondere lösbar gehalten ist, wobei die Sensorhalterung bevorzugt rotierbar an dem Führungsarm, insbesondere an dem freien Ende des Führungsarms, angeordnet ist. Der Führungsarm ist vorzugsweise als Kragträger ausgebildet.

Bevorzugt ist der Sensor an dem freien Ende des Führungsarms derart angeordnet, dass seine Messrichtung zumindest im Wesentlichen senkrecht zu der ersten Rotationsachse ausgerichtet ist. Der Vorteil hierbei ist, dass der Sensor, insbesondere ein Messkopf oder eine sensitive Fläche des Sensors, besonders genau auf die Oberfläche des Bauteils aufsetzbar ist. Insbesondere ist der Sensor somit derart auf das Bauteil aufsetzbar, dass der Aufsetzwinkel zwischen Sensor und der Oberfläche 90° beträgt.

Das erfindungsgemäße Verfahren zum Betreiben einer Vorrichtung gemäß einem der Ansprüche 1 bis 7 zum Erfassen der Schichtdicke eines beschichteten Bauteils, insbesondere einer Bremsscheibe für eine Scheibenbremse eines Kraftfahrzeugs, zeichnet sich dadurch aus, dass ein Bauteil auf einer Auflagefläche einer Haltevorrichtung angeordnet wird, und dass ein Sensor zur Schichtdickenmessung durch eine Führungseinrichtung, welche zum Halten und Führen des Sensors ausgebildet ist, entlang einer Vertikalachse verschoben und um eine erste Rotationsachse verschwenkt wird. Weiterhin ist erfindungsgemäß vorgesehen, dass der Sensor durch die Führungseinrichtung außerdem entlang einer Horizontalachse verschoben wird, und dass die Rotationsachse horizontal ausgerichtet wird. Es ergeben sich hierdurch die bereits genannten Vorteile. Weitere Vorteile und bevorzugte Merkmale ergeben sich insbesondere aus dem zuvor Beschriebenen sowie aus den Ansprüchen.

Im Folgenden soll die Erfindung anhand der Figuren näher erläutert werden.

Dazu zeigen
- Figur 1: eine Vorrichtung zum Erfassen der Schichtdicke eines beschichteten Bauteils mit einem Sensor in einer ersten Messposition, in einer perspektivischen Darstellung,
- Figur 2: der Sensor in einer zweiten Messposition,
- Figur 3: der Sensor in einer dritten Messposition und
- Figur 4: der Sensor in einer vierten Messposition.

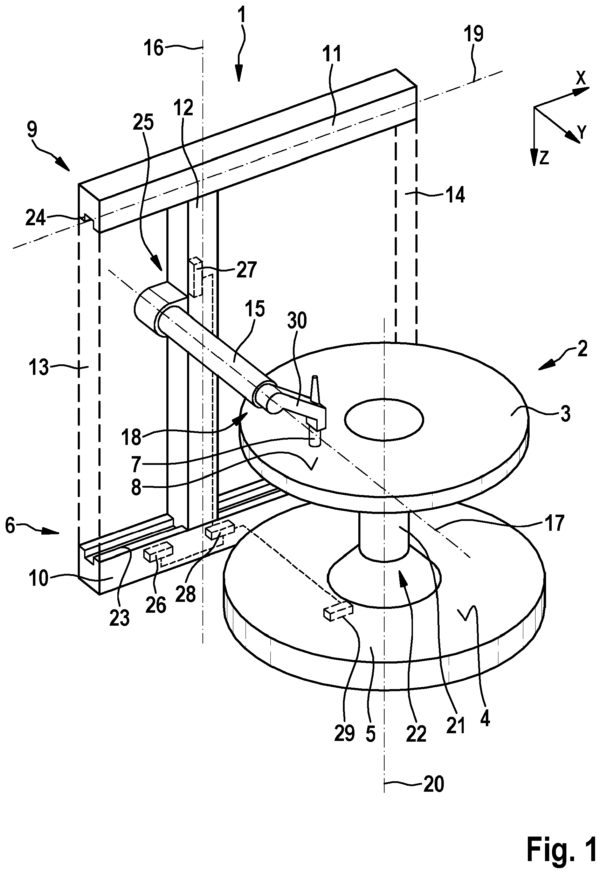

Figur 1 zeigt eine Vorrichtung 1 zum Erfassen der Schichtdicke eines beschichteten Bauteils 2, insbesondere einer Bremsscheibe 3 für eine Scheibenbremse eines Kraftfahrzeugs. Die Vorrichtung 1 weist zumindest eine, eine Auflagefläche 4 für das Bauteil 2 aufweisende Haltevorrichtung 5 und eine Führungseinrichtung 6 zum Halten und Führen eines Sensors 7 zur Schichtdickenmessung, vorliegend auf einer Oberseite 8 der Bremsscheibe3, auf. Vorzugsweise ist der Sensor 7 als magnetinduktive Messsonde oder als Wirbelstrommesssonde ausgebildet.

Die Führungseinrichtung 6 weist vorzugsweise eine Rahmenkonstruktion 9 mit einem Unterriegel 10 und optional einem Oberriegel 11 auf. Zusätzlich weist die Führungseinrichtung 6 einen insbesondere an dem Unterriegel 10 verschieblich gelagerten, im Wesentlichen stabförmig ausgebildeten Tragarm 12 auf. Alternativ ist der Tragarm 12 zwischen Unterriegel 10 und Oberriegel 11 verschieblich gelagert, wobei Unterriegel 10 und Oberriegel 11 vorzugsweise durch einen ersten und zweiten Stiel 13,14 miteinander verbunden sind.

Der Sensor 7 ist durch die Führungseinrichtung 6, insbesondere einem an der Führungseinrichtung 6, insbesondere dem Tragarm 12 der Führungseinrichtung 6, angeordneten Führungsarm 15 entlang einer Vertikalachse 16, vorliegend dargestellt durch eine z-Achse, verschiebbar. Der Führungsarm 15 ist vorliegend koaxial zu einer ersten Rotationsachse 17 angeordnet, wobei der Sensor 7 an einem freien Ende 18 des Führungsarms 15 derart angeordnet ist, dass seine Messrichtung zumindest im Wesentlichen senkrecht zu der ersten Rotationsachse 17 ausgerichtet ist.

Der Sensor 7 ist durch die Führungseinrichtung 6, insbesondere den Tragarm 12, außerdem entlang einer Horizontalachse 19, vorliegend dargestellt durch eine x-Achse, verschiebbar.

Weiterhin ist der Sensor 7 um die erste Rotationsachse 17 verschwenkbar. Die horizontale Ausrichtung der ersten Rotationsachse 17 entspricht vorliegend einer Ausrichtung entlang einer dargestellten y-Achse.

Die Auflagefläche 4 der Haltevorrichtung 5 ist um eine zweite Rotationsachse 20, die vorzugsweise parallel zu der Vertikalachse 16 angeordnet ist, drehbar.

Vorliegend ist die Haltevorrichtung 5 beabstandet zu der Führungseinrichtung 6 angeordnet. Alternativ ist die Haltevorrichtung 5 einstückig mit der Führungseinrichtung 6 ausgebildet. Die Haltevorrichtung 5 ist insbesondere ein Messtisch, wobei auf der Auflagefläche 4 der Haltevorrichtung 5 das Bauteil 2 oder die Bremsscheibe 3 vorzugsweise direkt auflegbar ist. Vorliegend weist die Haltevorrichtung 5 ein mit der Haltevorrichtung 5 verbindbares/verbundenes Abstandselement 21 auf, welches zur Aufnahme des Bauteils 2 ausgebildet ist und das Bauteil 2 mit einem vorgebbaren Abstand zu der Auflagefläche 4 hält. Das Abstandselement 21 ist vorzugsweise als Stab ausgebildet, welcher vorzugsweise drehbar in der Haltevorrichtung 5 gelagert/lagerbar ist. Zur stabilen Aufnahme des Abstandselements 21 weist die Haltevorrichtung 5 zumindest eine, vorzugsweise kegelförmig ausgebildete Abstandselementaufnahme 22 auf, welche sich entlang der zweiten Rotationsachse 20 erstreckt. Die Abstandselementaufnahme 22 ist vorzugsweise einstückig mit der Auflagefläche 4 ausgebildet.

Vorzugsweise weist die Führungseinrichtung 6 zumindest eine Führungsschiene 23,24 auf, welche die Horizontalachse 19 definiert. Vorliegend weist die Führungseinrichtung 6 eine dem Unterriegel 10 zugeordnete erste Führungsschiene 23 auf. Optional ist dem Oberriegel 11 eine zweite Führungsschiene 24 zugeordnet. Vorzugsweise weist die Führungseinrichtung 6, insbesondere der Tragarm 12, eine weitere Führungsschiene 25 auf, welche die Vertikalachse 16 definiert. Die Führungseinrichtung 6, insbesondere der Tragarm 12, ist vorzugsweise mittels Rollen verschiebbar an der ersten Führungsschiene 23 gelagert. Der Führungsarm 15 ist ebenfalls vorzugsweise mittels Rollen verschiebbar an der weiteren Führungsschiene 25 gelagert.

Vorliegend weist die Führungseinrichtung 6 einen ersten ansteuerbaren Aktuator 26 zum Verschieben und einen zweiten ansteuerbaren Aktuator 27 zum Drehen des Sensors 7 auf. Die Aktuatoren 26,27 sind vorzugsweise jeweils als Elektromotoren ausgebildet. Der erste Aktuator 26 ist vorzugsweise mit einem hier nicht dargestellten Linearantrieb zur horizontalen Verschiebung des Tragarms 12 und vertikalen Verschiebung des Führungsarms 15, und der zweite Aktuator 27 mit vorzugsweise einem hier nicht dargestellten ersten Rotationsantrieb zum Verschwenken des Sensors 7 elektrisch verbunden. Der Linearantrieb und/oder der erste Rotationsantrieb sind beispielsweise jeweils als Riemenantriebe ausgebildet. Zur Ansteuerung der Aktuatoren 26,27 weist die Vorrichtung 1 vorzugsweise ein Steuergerät 28 auf, welches jeweils mit dem ersten und dem zweiten Aktuator 26,27 elektrisch verbunden/verbindbar ist.

Vorzugsweise weist die Haltevorrichtung 5 zumindest einen weiteren ansteuerbaren Aktuator 29 zum Verdrehen der Auflagefläche 4 auf. Der weitere Aktuator 29 ist ebenfalls vorzugsweise als Elektromotor ausgebildet und mit einem hier nicht dargestellten zweiten Rotationsantrieb, der ebenfalls als Riemenantrieb ausgebildet ist, elektrisch verbunden. Der weitere Aktuator 29 ist vorzugsweise ebenfalls mit dem Steuergerät 28 elektrisch verbunden. Das Steuergerät 28 weist vorzugsweise eine hier nicht dargestellte Datenspeichereinheit auf, in welcher beispielsweise vorgebbare Messpositionen oder Koordinaten von Messpositionen abgespeichert sind und welche an die Aktuatoren 26,27,29 übermittelt werden, um den Sensor 7 und die Bremsscheibe 3 entsprechend den Koordinaten zu positionieren oder auszurichten.

Vorzugsweise erfolgt vor einer Schichtdickenmessung eine Positionsbestimmung des Bauteils 2 oder der Bremsscheibe 3, beispielsweise mittels eines Abstandserfassungssensors, welcher vorzugsweise an dem Führungsarm 18 anordenbar/angeordnet ist, so dass daraufhin die Schichtdickenmessung zuverlässig durchführbar ist.

Vorzugsweise ist der Sensor 7 an einer Aufnahme 30, welche in dem freien Ende 18 angeordnet ist, befestigt. Alternativ ist der Sensor 7 direkt in dem freien Ende 18 befestigt.

Vorzugsweise weist die Vorrichtung 1 eine Höhe in vertikaler Richtung von insbesondere 500mm und eine Breite in horizontaler Richtung von insbesondere 800mm auf. Der Führungsarm 15 weist vorzugsweise eine Länge von insbesondere 300mm auf.

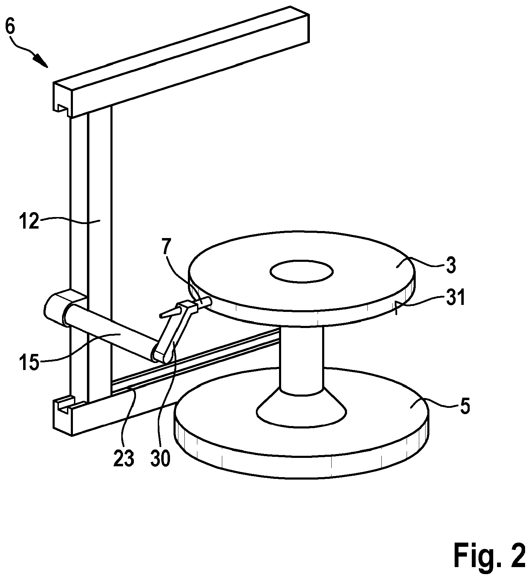

Figur 2 zeigt die Vorrichtung 1, wobei der Sensor 7 im Unterschied zu Figur 1 die Schichtdicke an einer Seitenwand, insbesondere eine Außenmantelwand 31 der Scheibenbremse 3 erfasst. Durch entsprechende Ansteuerung des ersten Aktuators 26 sind dabei der Tragarm 12 horizontal und der Führungsarm 15 vertikal verschoben worden. Durch Ansteuerung des zweiten Aktuators 27 ist der Sensor 7 um die erste Rotationsachse 17 verdreht worden.

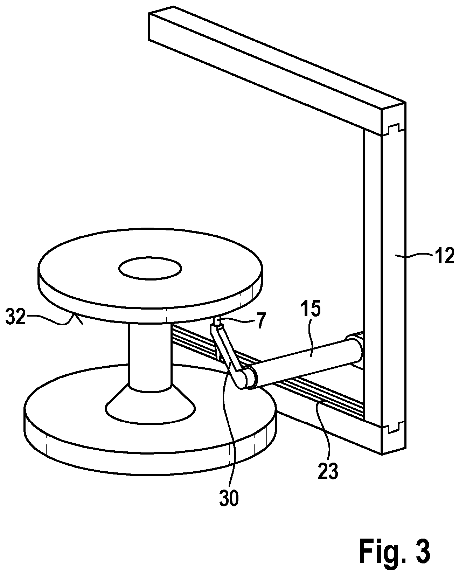

Figur 3 zeigt die Vorrichtung 1, wobei im Vergleich zu den vorherigen Figuren nunmehr eine Unterseite 32 der Bremsscheibe 3 durch den Sensor 7 zur Schichtdickenmessung erfasst wird.

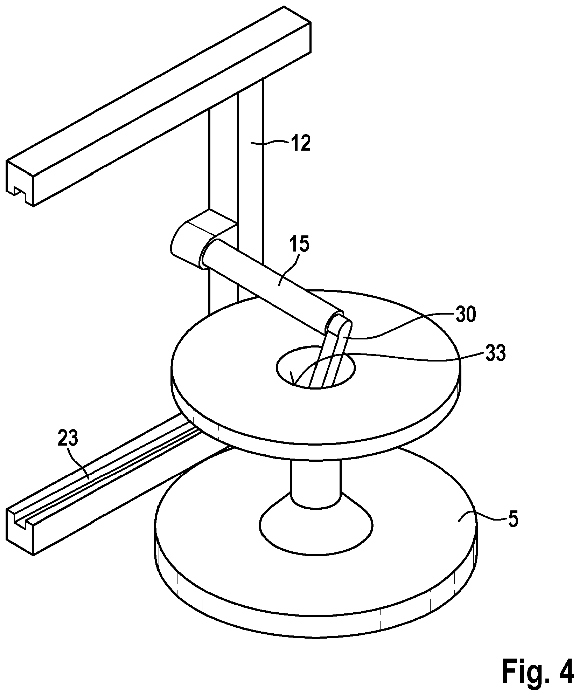

Figur 4 zeigt die Vorrichtung 1, wobei der Sensor 7 eine Topfmantelfläche oder eine Innenmantelwand 33 der Scheibenbremse 3 erfasst.

Zur besseren Anschaulichkeit sind einige aus der Figur 1 bekannten Elemente in den Figuren 2, 3 und 4 nicht eingezeichnet worden.

Durch die Vorrichtung 1 ist somit eine Oberseite 8, Unterseite 32 sowie Seitenwände, insbesondere eine Außenmantelwand 31 und Innenmantelwand 33, der Scheibenbremse 3 erfassbar. Somit kann die Bremsscheibe 3 insbesondere in einer einzigen Aufspannung an allen relevanten Stellen, also auch einer Felgenanlagefläche, Nabenanlagefläche, Topfmantelfläche und/oder Turmmantelfläche erfasst werden. Insbesondere die Kombination aus der automatischen Positionierbarkeit des Sensors 7 und dem automatischen Verdrehen der Auflagefläche 4 gewährleistet die Durchführbarkeit einer besonders zuverlässigen, wiederholbaren und vollständig automatisierten Schichtdickenmessung. Insbesondere können alle relevanten Flächen der Bremsscheibe 3 ohne manuelle Zwischenschritte angesteuert und vermessen werden. Die Vorrichtung 1 ist hierbei als autarkes Messgerät oder als separate Vorrichtung 1 ausgebildet, sie kann aber auch in einer Fertigungslinie eingebunden sein. Durch den Aufbau der Vorrichtung 1 ist es möglich, eine Messzeit zu verringern, einen Arbeitsaufwand für einen Benutzer sowie einen Benutzereinfluss zu minimieren und eine Wiederholgenauigkeit der Schichtdickenmessung zu verbessern.

Vorzugsweise weist die Vorrichtung 1 ein Gehäuse auf, welches die Vorrichtung 1 zumindest teilweise umgibt oder umhüllt.

Beschichtungen sind beispielsweise organische Lacke oder zinkhaltige flüssige Medien, welche die Bremsscheibe 3 vor einer Korrosion schützen sollen. Auch Schichtdicken andere Beschichtungen, wie beispielsweise thermisch gespritzte Schichten, können mit der Vorrichtung 1 gemessen werden.

## Patentansprüche

1. Vorrichtung (1) zum Erfassen der Schichtdicke eines beschichteten Bauteils (2), insbesondere einer Bremsscheibe (3) für eine Scheibenbremse eines Kraftfahrzeugs, mit zumindest einer, eine Auflagefläche (4) für das Bauteil (2) aufweisenden Haltevorrichtung (5), und mit einer Führungseinrichtung (6) zum Halten und Führen eines Sensors (7) zur Schichtdickenmessung, wobei der Sensor (7) durch die Führungseinrichtung (6) entlang einer Vertikalachse (16) verschiebbar und um eine erste Rotationsachse (17) verschwenkbar ist, wobei der Sensor (7) durch die Führungseinrichtung (6) außerdem entlang einer Horizontalachse (19) verschiebbar ist, und dass die erste Rotationsachse (17) horizontal ausgerichtet ist, **dadurch gekennzeichnet, dass** der Sensor (7) an einem freien Ende (18) eines koaxial zu der ersten Rotationsachse (17) angeordneten Führungsarms (15) angeordnet ist.

2. Vorrichtung nach Anspruch 1, **dadurch gekennzeichnet, dass** die Auflagefläche (4) der Haltevorrichtung (5) um eine zweite Rotationsachse (20), die vertikal ausgerichtet ist, drehbar ist.

3. Vorrichtung nach einem der vorhergehenden Ansprüche, **dadurch gekennzeichnet, dass** die Führungseinrichtung (6) einen oder mehrere ansteuerbare Aktuatoren (26,27) zum Verschieben und/oder Drehen des Sensors (7) aufweist.

4. Vorrichtung nach einem der vorhergehenden Ansprüche, **dadurch gekennzeichnet, dass** die Führungseinrichtung (6) zumindest eine Führungsschiene (23,24), welche die Horizontalachse (19) definiert, aufweist.

5. Vorrichtung nach einem der vorhergehenden Ansprüche, **dadurch gekennzeichnet, dass** die Haltevorrichtung (5) zumindest einen ansteuerbaren Aktuator (29) zum Verdrehen der Auflagefläche (4) aufweist.

6. Vorrichtung nach einem der vorhergehenden Ansprüche, **dadurch gekennzeichnet, dass** der Sensor (7) als magnetinduktive Messsonde oder als Wirbelstrommesssonde ausgebildet ist.

7. Vorrichtung nach einem der vorhergehenden Ansprüche, **dadurch gekennzeichnet, dass** der Sensor (7) an dem freien Ende (18) des Führungsarms (15) derart angeordnet ist, dass seine Messrichtung zumindest im Wesentlichen senkrecht zur ersten Rotationsachse (17) ausgerichtet ist.

8. Verfahren zum Betreiben einer Vorrichtung gemäß einem der Ansprüche 1 bis 7, zum Erfassen der Schichtdicke eines beschichteten Bauteils (2), insbesondere einer Bremsscheibe (3) für eine Scheibenbremse eines Kraftfahrzeugs, mit zumindest einer, eine Auflagefläche (4) für das Bauteil (2) aufweisenden Haltevorrichtung (5), und mit einer Führungseinrichtung (6) zum Halten und Führen eines Sensors (7) zur Schichtdickenmessung, wobei der Sensor (7) durch die Führungseinrichtung (6) entlang einer Vertikalachse (16) verschoben wird und um eine erste Rotationsachse (17) verschwenkt wird, **dadurch gekennzeichnet, dass** der Sensor (7) durch die Führungseinrichtung (6) außerdem entlang einer Horizontalachse (19) verschoben wird, und dass die Rotationsachse (17) horizontal ausgerichtet wird.

## Claims

1. Device (1) for detecting the layer thickness of a coated component (2), in particular a brake disk (3) for a disk brake of a motor vehicle, comprising at least one holding device (5) having a bearing surface (4) for the component (2) and comprising a guiding device (6) for holding and guiding a sensor (7) for measuring the layer thickness, the sensor (7) being movable by the guiding device (6) along a vertical axis (16) and pivotable about a first axis of rotation (17), the sensor (7) also being movable by the guiding device (6) along a horizontal axis (19) and in that the first axis of rotation (17) is oriented horizontally, **characterized in that** the sensor (7) is arranged at a free end (18) of a guiding arm (15) arranged coaxially to the first axis of rotation (17).

2. Device according to Claim 1, **characterized in that** the bearing surface (4) of the holding device (5) is rotatable about a second axis of rotation (20) which is oriented vertically.

3. Device according to one of the preceding claims, **characterized in that** the guiding device (6) has one or multiple controllable actuators (26, 27) for moving and/or turning the sensor (7).

4. Device according to one of the preceding claims, **characterized in that** the guiding device (6) has at least one guide rail (23, 24) which defines the horizontal axis (19) .

5. Device according to one of the preceding claims, **characterized in that** the holding device (5) has at least one controllable actuator (29) for rotating the bearing surface (4).

6. Device according to one of the preceding claims, **characterized in that** the sensor (7) is configured as a magnetic inductive measuring probe or as an eddy-current measuring probe.

7. Device according to one of the preceding claims, **characterized in that** the sensor (7) is arranged at the free end (18) of the guiding arm (15) in such a manner that its measuring direction is oriented at least substantially perpendicularly to the first axis of rotation (17).

8. Method for operating a device according to one of Claims 1 to 7, for detecting the layer thickness of a coated component (2), in particular a brake disk (3) for a disk brake of a motor vehicle, comprising at least one holding device (5) having a bearing surface (4) for the component (2) and comprising a guiding device (6) for holding and guiding a sensor (7) for measuring the layer thickness, the sensor (7) being moved by the guiding device (6) along a vertical axis (16) and pivoted about a first axis of rotation (17), **characterized in that** the sensor (7) is also moved by the guiding device (6) along a horizontal axis (19) and that the axis of rotation (17) is oriented horizontally.

## Revendications

1. Dispositif (1) de détection de l'épaisseur de couche d'un composant (2) pourvu d'un revêtement, en particulier d'un disque de frein (3) destiné à un frein à disque d'un véhicule automobile, le dispositif comprenant au moins un dispositif de retenue (5) qui comporte une surface d'appui (4) destiné au composant (2), et un moyen de guidage (6) destiné à maintenir et guider un capteur (7) pour mesurer l'épaisseur de couche, le capteur (7) pouvant être déplacé par le moyen de guidage (6) le long d'un axe vertical (16) et pouvant pivoter sur un premier axe de rotation (17), le capteur (7) pouvant également être déplacé par le dispositif de guidage (6) le long d'un axe horizontal (19), et en ce que le premier axe de rotation (17) est orienté horizontalement, **caractérisé en ce que** le capteur (7) est disposé à une extrémité libre (18) d'un bras de guidage (15) disposé coaxialement au premier axe de rotation (17).

2. Dispositif selon la revendication 1, **caractérisé en ce que** la surface d'appui (4) du dispositif de retenue (5) peut tourner sur un deuxième axe de rotation (20) qui est orienté verticalement.

3. Dispositif selon l'une des revendications précédentes, **caractérisé en ce que** le moyen de guidage (6) comporte un ou plusieurs actionneurs commandables (26, 27) destinés à déplacer et/ou faire tourner le capteur (7).

4. Dispositif selon l'une des revendications précédentes, **caractérisé en ce que** le moyen de guidage (6) comporte au moins un rail de guidage (23, 24) qui définit l'axe horizontal (19).

5. Dispositif selon l'une des revendications précédentes, **caractérisé en ce que** le dispositif de retenue (5) comporte au moins un actionneur commandable (29) destiné à faire tourner la surface d'appui (4).

6. Dispositif selon l'une des revendications précédentes, **caractérisé en ce que** le capteur (7) est conçu comme une sonde de mesure magnéto-inductive ou comme une sonde de mesure à courants de Foucault.

7. Dispositif selon l'une des revendications précédentes, **caractérisé en ce que** le capteur (7) est disposé à l'extrémité libre (18) du bras de guidage (15) de telle sorte que sa direction de mesure soit orientée au moins sensiblement perpendiculairement au premier axe de rotation (17).

8. Procédé de fonctionnement d'un dispositif selon l'une des revendications 1 à 7, pour détecter l'épaisseur de couche d'un composant (2) pourvu d'un revêtement, notamment d'un disque de frein (3) destiné à un frein à disque d'un véhicule automobile, le dispositif comprenant au moins un dispositif de retenue (5) qui comporte une surface d'appui (4) destiné au composant (2), et un moyen de guidage (6) destiné à maintenir et guider un capteur (7) pour mesurer l'épaisseur de couche, le capteur (7) étant déplacé par le moyen de guidage (6) le long d'un axe vertical (16) et étant pivoté sur un premier axe de rotation (17), **caractérisé en ce que** le capteur (7) est en outre déplacé par le moyen de guidage (6) le long d'un axe horizontal (19), et **en ce que** l'axe de rotation (17) est orienté horizontalement.
